# EUROPEAN PATENT APPLICATION

(11) **EP 4 235 212 A1**
(43) Date of publication of application: **30.08.2023**
(21) Application number: 23156734.8
(22) Date of filing: 15.02.2023
(51) Int. Cl.: G01S 7/48, G01S 17/08, G01S 17/931, B60W 30/18, G08G 1/16

(54) **LENGTH ESTIMATION OF A VEHICLE USING LIDAR POINT CLOUDS**

(30) Priority: 24.02.2022 DE 102022104354
(71) Applicant: Valeo Schalter und Sensoren GmbH, 74321 Bietigheim-Bissingen (DE)
(72) Inventor: Nasir, Umair, 74321 Bietigheim-Bissingen (DE); Amarendra, Bharath, 74321 Bietigheim-Bissingen (DE)
(74) Representative: Pothmann, Karsten

(57) **Abstract**

According to a method for estimating a length of a vehicle (1) driving in front of an ego-vehicle (8), a sensor dataset is generated by means of a lidar system (11) of the ego-vehicle (8), wherein the vehicle (1) is within a field of view (10) of the lidar system (11). A first distance (X0) between the ego-vehicle (8) and a rear end (2) of the vehicle (1) is determined depending on the sensor dataset. A second distance (X3) between the ego-vehicle (8) and a reference component, which is at least a part of a front wheel (5) of the vehicle (1) or an outer part of an underbody (6) of the vehicle (1), is determined depending on the sensor dataset, and the length of the vehicle (1) is estimated depending on the first distance (X0) and the second distance (X3).

## Description

The present invention is directed to a method for estimating a length of a vehicle driving in front of an ego-vehicle, wherein at least one sensor dataset is generated by means of a lidar system of the ego-vehicle, wherein the vehicle is within a field of view of the lidar system. A first distance between the ego-vehicle and a rear end of the vehicle is determined depending on the at least one sensor dataset. The invention is further directed to a method for guiding an ego-vehicle at least one in part automatically, to a vehicle length estimation system, to an electronic vehicle guidance system and to a motor vehicle.

Many vehicles are equipped with advanced driver assistance systems, ADAS, or other electronic vehicle guidance systems for guiding the vehicle automatically or in part automatically. Therein, the electronic vehicle guidance system may, in particular, affect or partially or completely take over the longitudinal and/or lateral control of the ego-vehicle. In traffic situations, information about the environment and objects in the environment, in particular further vehicles, is vital to implement a safe guidance of the ego-vehicle. In particular, the outer dimensions of other vehicles in the environment, for example the length of those vehicles, may be an important information for the electronic vehicle guidance system. For example, if an automatic or semi-automatic overtaking maneuver is planned by the electronic vehicle guidance system, the length of the vehicle to be overtaken may be taken into account to ensure an efficient and safe maneuver.

In scenarios where the ego-vehicle and the other vehicle are driving along different lanes more or less next to each other, the length of the vehicle can be estimated for example by means of side cameras of the ego-vehicle. However, in scenarios where the vehicle is driving in front of the ego-vehicle, this is in general not possible in the same way.

Document WO 2017/080930 A1 is directed to a vehicle length determination system of a vehicle, which is configured to determine a length of another vehicle in the vehicle's vicinity. A detection unit is adapted to detect a first distance between the vehicle and a front side or rear side of the other vehicle and to detect a second distance between the vehicle and a side mirror of the other vehicle. A control unit is adapted to calculate the length of the other vehicle depending on the determined first and second distance. Consequently, the length cannot be determined exactly in this way. If the first distance is determined with respect to the rear side, the length can only be determined up to a distance of the side mirror to the front side of the other vehicle. On the other hand, if the first distance is determined according to the front side of the other vehicle, the length may only be estimated up to the distance of the rear side to the side mirror. Since the side mirrors are commonly not mounted particularly close to the front side or the rear side of the other vehicle, a relatively large uncertainty for estimating the length results.

It is an objective of the present invention, to estimate the length of a vehicle driving in front of an ego-vehicle more accurately or with less uncertainty, respectively.

This objective is achieved by the respective subject matter of the independent claims. Further implementations and preferred embodiments are subject matter of the dependent claims.

The invention is based on the idea to use a lidar system of the ego-vehicle to detect a distance between the ego-vehicle and a reference component of the vehicle, which is a front wheel, a part of the front wheel or an outer part of an underbody of the vehicle. The length of the vehicle is then estimated depending on that distance and a distance between the ego-vehicle and the rear end of the vehicle.

According to the invention a method for estimating a length of a vehicle driving in front of an ego-vehicle is provided. At least one sensor dataset is generated by means of a lidar system of the ego-vehicle, wherein the vehicle driving in front of the ego-vehicle is within a field of view of the lidar system. A first distance between the ego-vehicle and a rear end of the vehicle is determined depending on the at least one sensor dataset, in particular by means of at least one computing unit of the ego-vehicle. A second distance between the ego-vehicle and a reference component of the vehicle is determined depending on the at least one sensor dataset, in particular by means of the at least one computing unit. The reference component of the vehicle is at least a part of a front wheel or, in other words, the reference component is a front wheel or a part of the front wheel. Alternatively, the reference component of the vehicle is an outer part of an underbody of the vehicle. The length of the vehicle is estimated depending on the first distance and the second distance, in particular depending on a difference between the first distance and the second distance, in particular by means of the at least one computing unit.

That the vehicle is driving in front of the ego-vehicle may for example be understood such as that the ego-vehicle and the vehicle are both driving in a traffic situation on the same road and, if the road has more than one lane, on the same lane of the road. In particular, the vehicle is driving directly in front of the ego-vehicle or, in other words, there is no further vehicle present between the vehicle and the ego-vehicle on the same lane, which could occlude the vehicle for the lidar system.

An environmental sensor system can be understood as a sensor system, which is able to generate sensor data or sensor signals, which depict, represent or image an environment of the environmental sensor system. In particular, the ability to capture or detect electromagnetic or other signals from the environment, cannot be considered a sufficient condition for a sensor system being an environmental sensor system. For example, cameras, lidar systems, radar systems or ultrasonic sensor systems may be considered as environmental sensor systems.

A known design of lidar systems are so-called laser scanners, in which a laser beam is deflected by means of a deflection unit so that different deflection angles of the laser beam may be realized. The deflection unit may, for example, contain a rotatably mounted mirror. Alternatively, the deflection unit may include a mirror element with a tiltable and/or pivotable surface. The mirror element may, for example, be configured as a micro-electromechanical system, MEMS. In the environment, the emitted laser beams can be partially reflected, and the reflected portions may in turn hit the laser scanner, in particular the deflection unit, which may direct them to a detector unit of the laser scanner comprising the at least one optical detector. In particular, each optical detector of the detector unit generates an associated detector signal based on the portions detected by the respective optical detector. Based on the spatial arrangement of the respective optical detector, together with the current position of the deflection unit, in particular its rotational position or its tilting and/or pivoting position, it is thus possible conclude the direction of incidence of the detected reflected components of light. A processing unit or an evaluation unit of the laser scanner may, for example, perform a time-of-flight measurement to determine a radial distance of the reflecting object. Alternatively or additionally, a method, according to which a phase difference between the emitted and detected light is evaluated, may be used to determine the distance.

A point cloud may be understood as a set of points, wherein each point is characterized by respective coordinates in a two-dimensional or three-dimensional coordinate system. In case of a three-dimensional point cloud, the three-dimensional coordinates may, for example, be determined by the direction of incidence of the reflected components of light and the corresponding time-of-flight or radial distance measured for this respective point. In other words, the three-dimensional coordinate system may be a three-dimensional polar coordinate system. However, the information may also be pre-processed to provide three-dimensional Cartesian coordinates for each of the points. In general, the points of a point cloud may be given in an orderless or unsorted manner, in contrast to, for example, a camera image. In addition to the spatial information, namely the two-dimensional or three-dimensional coordinates, the point cloud may also store additional information or measurement values for the individual points such as an echo pulse width, EPW, of the respective sensor signal.

The lidar system is, in particular, mounted on the ego-vehicle such that the field of view is oriented at least in part in forward driving direction of the ego-vehicle. For example, the lidar system may be mounted at a front side or front end of the ego-vehicle, for example at a bumper, at a front end of a hood or a cooler of the ego-vehicle or at another suitable position, which allows to detect objects in front of the ego-vehicle, which are relatively close to the road surface, such as the wheel or the underbody of the vehicle.

The at least one computing unit of the ego-vehicle may for example be comprise one or more electronic control units, ECUs, of the ego-vehicle or other computing devices of the ego-vehicle. The lidar system may comprise the at least one computing unit or parts of the at least one computing unit or the at least one computing unit may be separated from the lidar system.

In particular, the at least one computing unit and/or the lidar system may be part of an electronic vehicle guidance system of the ego-vehicle.

The underbody of the vehicle, which may also be denoted as under-chassis of the vehicle may be considered as a part of the body or chassis of the vehicle, which faces the road surface or, in certain regions, the wheels of the vehicle. For example, the underbody may be considered as the entirety of all components of the vehicle, which are arranged outside of the vehicle and face the road surface or the wheels of the vehicle. The underbody may for example comprise components or parts of components such as an axle, in particular a front axle, of the vehicle, a suspension system of the vehicle, a transverse link of the vehicle et cetera. Consequently, in case the reference component of the vehicle is an outer part of the underbody of the vehicle, the reference component is, in particular, a vehicle part that protrudes downward from the vehicle towards the road surface.

Here and in the following, a wheel of a vehicle may be understood as a complete wheel comprising in particular a rim and a tire of the wheel. In case the reference component is at least a part of the front wheel, it may therefore be for example a part of the rim and/or the tire.

To determine the first and the second distance, respectively, the at least one computing unit, in particular, detects the rear end of the vehicle and detects the reference component, respectively, based on the at least one sensor dataset and then calculates the distance based on the detected reference component and the rear end.

In particular, the at least one sensor dataset may comprise one or more point clouds, which contains a plurality of scan points. To detect the rear end and the reference component, respectively, the at least one computing unit may, in particular, identify those scan points of the plurality of scan points, which correspond to or apparently correspond to the rear end of the vehicle and the reference component, respectively. To this end, the at least one computing unit may apply one or more filter algorithms or rules or plausibility checks, which may for example concern the distance of the respective scan points from the ego-vehicle, their height above the road surface, the angle of incidence of the correspondingly reflected light, the reflectivity of the reflecting target in the environment and so forth.

In particular, the at least one computing unit may detect to or more point clusters of scan points of the plurality of scan points based on the at least one sensor dataset and determine, which of the point clusters correspond to the rear end and the reference component, respectively. For example, the rear end may correspond to the point cluster with the least distance from the ego-vehicle. The reference component may for example give rise to a point cluster at a predefined typical distance range.

In particular, the second distance is greater than a third distance between the ego-vehicle and a side mirror of the vehicle.

The difference between the first and the second distance, in particular the second distance minus the first distance, may be considered as an approximate length of the vehicle. Even though the reference component is not necessarily located at the front end of the vehicle, this approximate length may already be sufficient for certain applications. Furthermore, an offset value may be added to the difference between the first and the second distance to get an improved estimation. The exact length of the vehicle may, in particular be considered as a distance between the rear end and the front end of the vehicle.

By considering the front wheel or a part of the front wheel or an outer part of the underbody of the vehicle as the reference component, an improved estimation of the length of the vehicle is possible, in particular in case the second distance is greater than the third distance and, consequently, the reference component is closer to the front end of the vehicle than the side mirrors of the vehicle.

The invention exploits the fact that a lidar system, which is appropriately mounted on the ego-vehicle, is able to detect components underneath the body of the vehicle or between the road surface and the vehicle, respectively, such as the underbody or the wheels of the vehicle. In combination with knowledge or assumptions regarding the position of the reference component with respect to the front end of the vehicle, a reliable estimation of the length is achievable.

According to several implementations of the method for estimating the length of the vehicle, the length of the vehicle is estimated, in particular by the at least one computing unit, as a sum of an offset value and the difference between the first distance and the second distance.

The offset value compensates the distance of the front end of the vehicle to the reference component and is, in particular, a predefined or predetermined offset value. For example, the offset value may be a constant default value for all vehicles or may be selected from a plurality of default values for different types of vehicles, such as passenger cars, trucks, vans, et cetera. However, a more detailed distinction is also possible. The information regarding the type of the vehicle may be obtained for example according to a known method for object detection, for example camera-based object detection or lidar-based object detection or radar-based object detection.

Furthermore, also the difference between the first distance and the second distance may be used to estimate the offset value. For example, a database may be provided, which stores corresponding offset values associated to the difference between the first and the second distance for a plurality of existing vehicles or vehicle types.

In other words, according to several implementations, the offset value is selected, in particular by means of the at least one computing unit, depending on the difference between the first distance and the second distance from a database, which is, in particular, stored on a memory device of the ego-vehicle, for example the at least one computing unit, or on a memory device of an external computing unit, such as a server or cloud system.

According to several implementations, a model or type of the vehicle is determined, in particular by the at least one computing unit, depending on the at least one sensor dataset and/or depending on at least one camera image, which is generated by means of at least one camera of the ego-vehicle and which depicts the vehicle. The offset value is determined, for example selected from the database, depending on the model or type of the vehicle.

Therein, the type of the vehicle may for example refer to a general type or purpose of the vehicle, such as the vehicle being a passenger car, a motorcycle, a truck, a van et cetera. The model of the vehicle may, for example, be more specifically identifying the vehicle. For example, the model of the vehicle may correspond to a specific model or model series of a specific manufacturer or brand of the vehicle.

According to several implementations, the at least one sensor dataset comprises the plurality of scan points. A subset of the plurality of scan points is determined, in particular by the at least one computing unit, such that each scan point of the subset is characterized by a distance from the ego-vehicle, which exceeds the first distance by at least a predefined minimum exceedance. The reference component is determined depending on the subset of the plurality of scan points.

In other words, the plurality of scan points may be filtered by their distance from the ego-vehicle and only those scan points, whose distances exceed the first distance by at least the minimum exceedance are taken into account for detecting and identifying the reference component, while other scan points of the plurality of scan points are not considered for this purpose.

In this way, it is ensured that there is no false detection of the reference component. For example, the rear wheels may also be detected by means of the at least one sensor dataset. By adjusting the minimum exceedance such that only desired reference components, such as front wheels or front mounted part of the underbody of the vehicle, are detected as the reference component. This ensures a high accuracy and a good estimation of the length of the vehicle.

The minimum exceedance may for example be greater than 1.5 m, for example it may lie between 1.5 m and 3 m.

According to several implementations, the subset of the plurality of scan points is determined such that each scan point of the subset is characterized by a height above a road surface, which lies within a predefined height interval.

In other words, the plurality of scan points may be filtered with respect to their height above the road surface. In this way, the position of the desired reference component may be more tightly defined, which leads to an increased reliability for detecting the reference component and therefore for an increased accuracy of the length estimation.

It is noted that the height filtering may be carried out in addition to or alternatively to the filtering with respect to the distance from the ego-vehicle.

The height interval is for example an interval [0, H], wherein H is equal to or smaller than 1 m, for example H is equal to or smaller than 0.8 m or equal to or smaller than 0.5 m.

According to several implementations each scan point of the plurality of scan points is characterized by a value concerning a target reflectivity.

The target reflectivity may be understood as a reflectivity or apparent reflectivity of a target, which reflects the corresponding light emitted by the lidar system, which is in turn detected by the lidar system to generate the corresponding scan point. For example, each such reflection may lead to a signal pulse of an optical detector, such as a photodiode or an avalanche photodiode, of the lidar system. Parameters describing the size or shape of the pulse, for example the echo-pulse width, EPW, may be interpreted as a measure for the target reflectivity and may be used as the value concerning the target reflectivity or to derive the value concerning the target reflectivity.

According to several implementations, the subset is determined such that each scan point of the subset is characterized by a value concerning the target reflectivity, which lies within a predefined reflectivity interval.

In other words, the scan points of the plurality of scan points are filtered with respect to their target reflectivity. This may be carried out in addition to the height filtering and/or the distance filtering or alternatively.

By means of the reflectivity filtering, the properties of the desired reference component may be defined in more detail. This may be particularly useful to distinguish scan points corresponding to the reference component from scan points on the road surface et cetera. For example, scan points, which are caused by reflections from the rim or tire of a wheel or a metallic component of the underbody may be in a specific typical range. This knowledge may be exploited to define the reflectivity interval.

As mentioned above, in the corresponding implementations, the reference component is determined depending on the subset of the plurality of scan points. This may be understood such that the one or more point clusters corresponding to the reference component are selected from the subset only but not from other points of the plurality of scan points.

According to several implementations, the third distance between the ego-vehicle and a side mirror component of the vehicle is determined depending on the at least one sensor dataset, in particular by the at least one computing unit. The length of the vehicle is estimated depending on the first distance, the second distance and the third distance.

The third distance may for example be considered as redundant information with respect to the second distance. Alternatively or in addition, the third distance may be used to determine the offset value or the model or type of the vehicle more accurately.

In particular, according to several implementations, the offset value is determined, for example selected from the database, depending on the third distance, for example depending on a further difference between the third distance and the first distance.

The third distance may, in general, be determined analogously as described with respect to the detection of the second. However, the corresponding filtering, in particular with respect to height, distance and reflectivity, may be adjusted accordingly.

According to a further aspect of the invention, a method for guiding an ego-vehicle at least in part automatically is provided. Therein, the ego-vehicle is guided at least in part automatically depending on a length of a vehicle driving in front of the ego-vehicle, wherein the length is estimated by using a method according to the invention for estimating a length of a vehicle.

In particular, at least one control signal for guiding the ego-vehicle at least in part automatically may be generated by at least one control unit of the ego-vehicle, for example an electronic vehicle guidance system of the ego-vehicle, depending on the length. The at least one control signal may be provided to one or more actuators of the ego-vehicle, which are configured to affect a longitudinal and/or lateral control of the ego-vehicle depending on the at least one control signal.

According to at least one implementation of the method for guiding an ego-vehicle at least in part automatically, at least one parameter for an overtaking maneuver is determined, in particular by the at least one computing unit, depending on the length and the overtaking maneuver is initiated, in particular by the electronic vehicle guidance system, according to the at least one parameter.

The at least one parameter may for example comprise a target speed or target acceleration of the ego-vehicle. For example, the longer the vehicle, the higher may be the target acceleration of the ego-vehicle to ensure a safe maneuver.

After the overtaking maneuver has been initiated, the at least one parameter may also be adapted according to additional sensor information obtained, for example from the lidar system. For example, also the length may be updated after the overtaking maneuver has been initiated and the at least one parameter may be adapted accordingly.

According to several implementations, an environment of the ego-vehicle comprising the vehicle is monitored by means of the lidar system and/or by means of a further environmental system of the ego-vehicle. After the overtaking maneuver is initiated and before the overtaking maneuver is completed, a lane change maneuver of the vehicle is recognized in particular by the at least one computing unit, depending on a result of the monitoring. A deceleration maneuver of the ego-vehicle is initiated depending on the length of the vehicle.

For example, at least one further parameter for the deceleration maneuver, for example a target deceleration, may be determined depending on the length. For example, the longer the vehicle, the higher is the target deceleration to avoid a collision when the vehicle is actually changing lanes while the ego-vehicle is carrying out the overtaking maneuver. According to a further aspect of the invention, a vehicle length estimation system for an ego-vehicle is provided. The vehicle length estimation system comprises a lidar system for the ego-vehicle, which is configured to generate at least one sensor dataset. The vehicle length estimation system comprises at least one computing unit, which is configured to determine a first distance between the ego-vehicle and a rear end of a vehicle in a field of view of the lidar system, which is driving in front of the ego-vehicle, depending on the at least one sensor dataset. The at least one computing unit is configured to determine a second distance between the ego-vehicle and a reference component, which is at least a part of a front wheel of the vehicle or an outer part of an underbody of the vehicle, depending on the at least one sensor dataset. The at least one computing unit is configured to estimate a length of the vehicle depending on the first distance and the second distance.

Further implementations of the vehicle length estimation system according to the invention follow directly from the various implementations of the method for estimating a length of a vehicle according to the invention and the various implementations of the method for guiding the ego-vehicle at least in part automatically according to the invention and vice versa, respectively. In particular, the vehicle length estimation system may be configured to carry out a method for estimating a length according to the invention or carries out such a method.

According to a further aspect of the invention, an electronic vehicle guidance system for an ego-vehicle is provided. The electronic vehicle guidance system comprises a vehicle length estimation system according to the invention. The electronic vehicle guidance system, for example the at least one computing unit, comprises at least one control unit, which is configured to generate at least one control signal for guiding the ego-vehicle at least in part automatically depending on the length of the vehicle.

According to a further aspect of the invention, a motor vehicle comprising a vehicle length estimation system according to the invention or an electronic vehicle guidance system according to the invention is provided. In this case, the motor vehicle corresponds to the ego-vehicle.

According to several implementations of the motor vehicle, the lidar system is mounted at a front end of the motor vehicle and a mounting height of the lidar system is equal to or less than 1 m. In particular, the mounting height is in the interval [0m, 1m].

A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a nonvolatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated June 2018.

Guiding the vehicle at least in part automatically may therefore comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

If it is mentioned in the present disclosure that a component of the vehicle length estimation system, the electronic vehicle guidance system or the motor vehicle according to the invention or the ego-vehicle, in particular the at least one computing unit, is adapted, configured or designed to, et cetera, to perform or realize a certain function, to achieve a certain effect or to serve a certain purpose, this can be understood such that the component, beyond being usable or suitable for this function, effect or purpose in principle or theoretically, is concretely and actually capable of executing or realizing the function, achieving the effect or serving the purpose by a corresponding adaptation, programming, physical design and so on.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures. Therein,
- Fig. 1: shows schematically a side view of a vehicle, whose length may be estimated by an exemplary implementation of a method for estimating a length of a vehicle according to the invention;
- Fig.2: shows schematically an ego-vehicle and a vehicle driving in front of the ego-vehicle, wherein the ego-vehicle comprises an exemplary implementation of a vehicle length estimation system according to the invention;
- Fig. 3: shows schematically an image of the vehicle from a perspective of the ego-vehicle;
- Fig. 4: shows schematically a first view on a point cloud generated by a lidar system according to an exemplary implementation of a vehicle length estimation system according to the invention;
- Fig. 5: schematically a second view on a point cloud generated by a lidar system according to an exemplary implementation of a vehicle length estimation system according to the invention;
- Fig. 6: shows schematically a further image of the vehicle from a perspective of the ego-vehicle; and
- Fig. 7: shows schematically a view on a further point cloud generated by a lidar system according to an exemplary implementation of a vehicle length estimation system according to the invention.

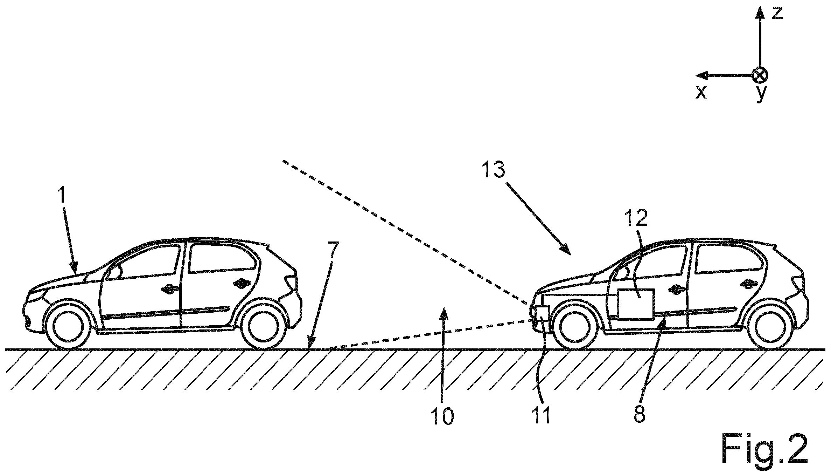

In Fig. 2, a side view of an ego-vehicle 8 comprising an exemplary implementation of a vehicle length estimation system 13 according to the invention as well as a vehicle 1 driving in front of the ego-vehicle 8 on the same lane of a road with a road surface 7 as the ego-vehicle 8 are shown schematically.

The vehicle length estimation system 13 comprises a lidar system 11, which is mounted at a front end of the ego-vehicle 8, for example at or integrated in the bumper or hood of the ego-vehicle 8. The vehicle length estimation system 13 further comprises a computing unit 12, which is connected to the lidar system 11 and may receive at least one sensor dataset, in particular a point cloud, from the lidar system 11. The ego-vehicle 8 is located in a field of view 10 of the lidar system 11. Therefore, the point cloud depicts the vehicle 1.

Fig. 2 shows also schematically a sensor coordinate system with an x-axis, a y-axis and a z-axis. The x-axis, which may also be denoted as longitudinal axis, may for example be orientated in forward driving direction of the ego-vehicle 8. The z-axis may be perpendicular to the road surface 7 and perpendicular to the x-axis. The y-axis, which may also be denoted as lateral axis, is orientated perpendicular to the x-axis and the z-axis.

The point cloud comprises a plurality of scan points, which are characterized by respective three-dimensional coordinates. The three-dimensional coordinates may be given in the sensor coordinate system x, y, z or may be transformed accordingly. Therein, the origin of the sensor coordinate system x, y, z may be defined such that x = 0 corresponds to a position, which has zero distance in x-direction from the lidar system 11. In other words, the x-coordinates of objects in the environment of the ego-vehicle 8 correspond to the distance from the ego-vehicle 8.

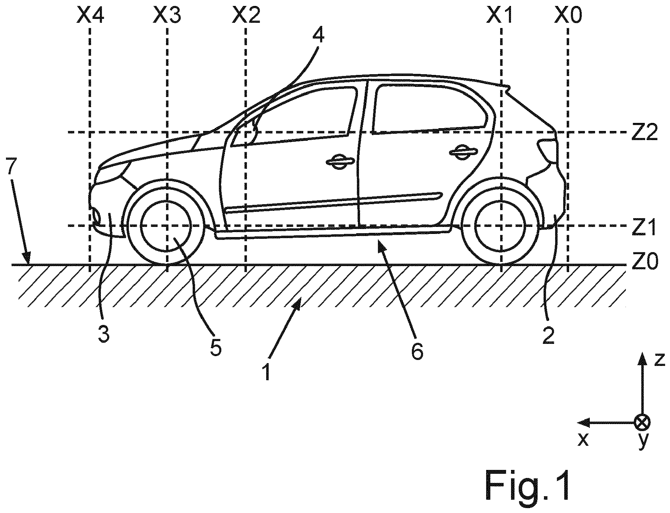

Fig. 1 shows the vehicle 1 in more detail. A rear end of the vehicle 1, for example a rear bumper 2, is located at a distance X0 from the ego-vehicle 8. Rear wheels of the vehicle 1 may for example be located at a distance X1 > X0, side mirrors 4 of the vehicle 1 may be located at a distance X2 > X1, front wheels 5 of the vehicle 1 may be located at a distance X3 > X2 and a front end, for example a front end of a front bumper 3, of the vehicle 1 may be located at a distance X4>X3 with respect to the ego-vehicle 8. The actual length of the vehicle 1 is therefore by L = X4 - X0.

The computing unit 12 may apply one or more filtering algorithms and/or object detection algorithms to the point cloud to determine scan points or point clusters of scan points, which correspond to the front wheels 5 of the vehicle 1 or to another reference component, which is an outer part of an underbody 6 of the vehicle 1. The computing unit 12 may also determine a point cluster of scan points corresponding to the rear end of the vehicle 1. Consequently, the computing unit 12 may compute the distance X0 and the distance X3.

The computing unit 12 may then compute an estimated length L' of the vehicle 1 depending on the distance X0 and the distance X3. For example, the computing unit 12 may compute the difference X3 - X0 and add an offset value Xoff to obtain L' = X3 - X0 + Xoff to approximate L.

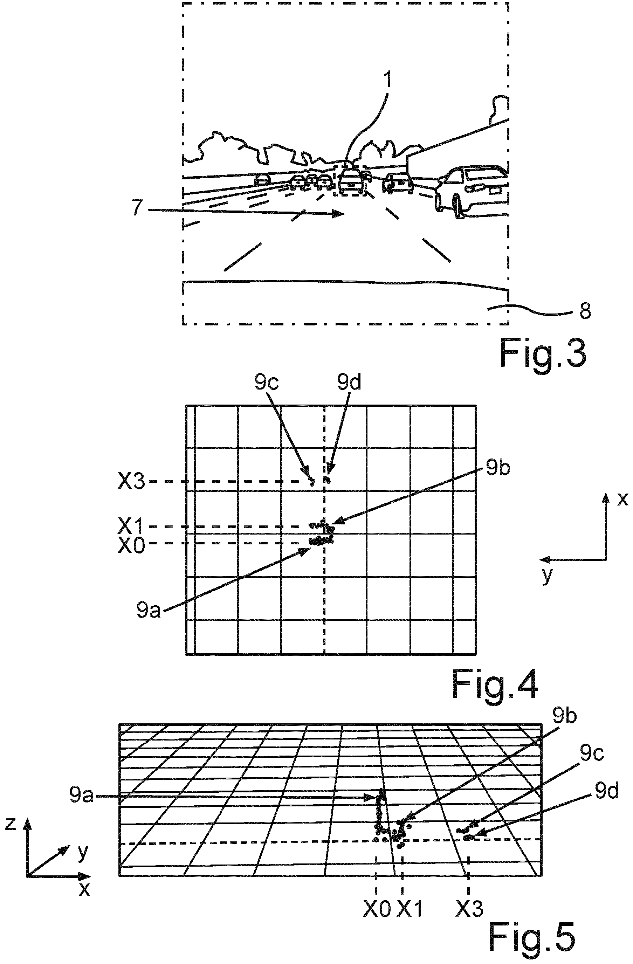

Fig. 3 shows schematically an image of the vehicle 1 from a perspective of the ego-vehicle 8 and Fig. 4 shows a corresponding point cloud from a top view. The point cloud comprises a point cluster 9a, which corresponds to the rear end of the vehicle and two point clusters 9c, 9d corresponding to the two front wheels 5 of the vehicle 1. Furthermore, also a point cluster 9b corresponding to the rear wheels of the vehicle 1 is visible in Fig. 4. Fig. 5 shows a corresponding perspective side view of the point cloud of Fig. 4 such that the height information is also visible.

In some implementations, the computing unit 12 may also determine the distance X2 of the side mirrors 4 based on the point cloud. The computing unit 12 may for example compute the difference X2 - X0 and add a further offset value to obtain a further estimation to the length. The further estimation may for example be used for validation purposes or may be averaged with the estimated length L' to obtain a more reliable result. Alternatively or in addition, the difference X2 - X0 may be used by the computing unit 12 to select the offset value Xoff.

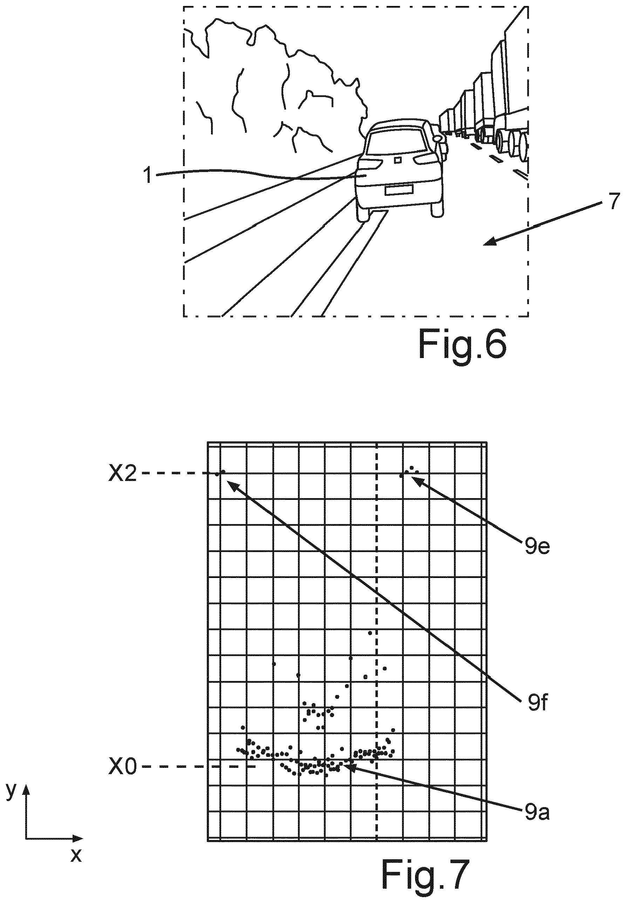

Fig. 6 shows a further schematic image of the vehicle 1 from a perspective of the ego-vehicle 8. Fig. 7 shows a top view of the corresponding point cloud. Therein, the point cluster 9a corresponding to the rear end of the vehicle 1 is visible as well as two point clusters 9e, 9f corresponding to the two side mirrors 4.

As described, the invention allows to estimate the length of a vehicle, which drives in front of the ego-vehicle more reliably and/or accurately. A certain part of the length, namely the distance between the reference component and the rear end of the vehicle, is estimated very accurately based on lidar data. Also the side view mirrors of the vehicle can accurately be detected, which may also be used to estimate the width of the vehicle.

The invention is particularly beneficial for vehicles, which have a relatively large distance from the road surface, such as vans or small trucks. On the one hand, for such type of vehicles, the length is particularly important for example for overtaking maneuvers. The lidar system may be strategically mounted at the front of the ego-vehicle so that it can see under the front driving vehicle and reflectance from the front wheels may be used to calculate the estimated length.

## Claims

1. Method for estimating a length of a vehicle (1) driving in front of an ego-vehicle (8),
wherein
- at least one sensor dataset is generated by means of a lidar system (11) of the ego-vehicle (8), wherein the vehicle (1) is within a field of view (10) of the lidar system (11);
- a first distance (X0) between the ego-vehicle (8) a rear end (2) of the vehicle (1) is determined depending on the at least one sensor dataset;
**characterized in that**
- a second distance (X3) between the ego-vehicle (8) and a reference component, which is at least a part of a front wheel (5) of the vehicle (1) or an outer part of an underbody (6) of the vehicle (1), is determined depending on the at least one sensor dataset; and
- the length of the vehicle (1) is estimated depending on the first distance (X0) and the second distance (X3).

2. Method according to claim 1,
**characterized in that**
the length of the vehicle (1) is estimated depending on a difference between the first distance (X0) and the second distance (X3).

3. Method according to claim 2,
**characterized in that**
the length of the vehicle (1) is estimated as a sum of an offset value and the difference between the first distance (X0) and the second distance (X3).

4. Method according to claim 3,
**characterized in that**
the offset value is selected from a database depending on the difference between the first distance (X0) and the second distance (X3).

5. Method according to one of claims 3 or 4,
**characterized in that**
- a model or type of the vehicle (1) is determined depending on the at least one sensor dataset and/or depending on at least one camera image, which is generated by means of at least one camera of the ego-vehicle (8) and which depicts the vehicle (1); and
- the offset value is determined depending on the model or type of the vehicle (1).

6. Method according to one of the preceding claims,
**characterized in that**
- the at least one sensor dataset comprises a plurality of scan points (9a, 9b, 9c, 9d, 9e, 9f);
- a subset of the plurality of scan points (9a, 9b, 9c, 9d, 9e, 9f) is determined, such that each scan point of the subset is **characterized by** a distance from the ego-vehicle (8), which exceeds the first distance by at least a predefined minimum exceedance; and
- the reference component is determined depending on the subset of the plurality of scan points (9a, 9b, 9c, 9d, 9e, 9f).

7. Method according to claim 6,
**characterized in that**
- the subset is determined such that each scan point of the subset is **characterized by** a height above a road surface (7), which lies within a predefined height interval;
and/or
- each scan point of the plurality of scan points (9a, 9b, 9c, 9d, 9e, 9f) is **characterized by** a value concerning a target reflectivity and the subset is determined such that each scan point of the subset is **characterized by** a value concerning the target reflectivity, which lies within a predefined reflectivity interval.

8. Method according to one of the preceding claims,
**characterized in that**
- a third distance (X2) between the ego-vehicle (8) and a side mirror component (4) of the vehicle (1) is determined depending on the at least one sensor dataset; and
- the length of the vehicle (1) is estimated depending on the first distance (X0), the second distance (X3) and the third distance (X2).

9. Method for guiding an ego-vehicle (8) at least in part automatically depending on a length of a vehicle (1) driving in front of the ego-vehicle (8),
**characterized in that**
the length is estimated by using a method according to one of the preceding claims.

10. Method according to claim 9,
**characterized in that**
at least one parameter for an overtaking maneuver is determined depending on the length and the overtaking maneuver is initiated according to the at least one parameter.

11. Method according to claim 10,
**characterized in that**
- an environment of the ego-vehicle (8) is monitored by means of the lidar system (11) and/or an environmental sensor system of the ego-vehicle (8);
- after the overtaking maneuver is initiated and before the overtaking maneuver is completed, a lane change maneuver of the vehicle (1) is recognized depending on a result of the monitoring;
- a deceleration maneuver of the ego-vehicle (8) is initiated depending on the length of the vehicle (1).

12. Vehicle length estimation system (13) for an ego-vehicle (8), comprising
- a lidar system (11) for the ego-vehicle (8), which is configured to generate at least one sensor dataset;
- at least one computing unit (12), which is configured to determine a first distance (X0) between the ego-vehicle (8) a rear end (2) of a vehicle (1) in a field of view (10) of the lidar system (11), which is driving in front of the ego-vehicle (8), depending on the at least one sensor dataset;
**characterized in that** the at least one computing unit (12) is configured to
- determine a second distance (X3) between the ego-vehicle (8) and a reference component, which is at least a part of a front wheel (5) of the vehicle (1) or an outer part of an underbody (6) of the vehicle (1), depending on the at least one sensor dataset; and
- to estimate a length of the vehicle (1) depending on the first distance (X0) and the second distance (X3).

13. Electronic vehicle guidance system for an ego-vehicle (8), which comprises a vehicle length estimation system (13) according to claim 12 and at least one control unit, which is configured to generate at least one control signal for guiding the ego-vehicle (8) at least in part automatically depending on the length of the vehicle (1).

14. Motor vehicle comprising a vehicle length estimation system (13) according to claim 12 or an electronic vehicle guidance system according to claim 13.

15. Motor vehicle according to claim 14,
**characterized in that**
the lidar system (11) is mounted at a front end of the motor vehicle and a mounting height of the lidar system (11) is less than 1 m.
